# FASCICULE DE BREVET EUROPEEN

(11) **EP 3 853 045 B1**
(45) Date de publication et mention de la délivrance du brevet: **12.07.2023**
(21) Numéro de dépôt: 19790672.0
(22) Date de dépôt: 18.09.2019
(51) Int. Cl.: B60C 15/06, B60C 9/02

(54) **PNEUMATIQUE COMPORTANT UNE ARMATURE DE CARCASSE FORMEE D'UNE UNIQUE COUCHE D'ELEMENTS DE RENFORCEMENT TEXTILES**
REIFEN MIT EINER KARKASSENBEWEHRUNG AUS EINER EINZIGEN SCHICHT TEXTILER VERSTÄRKUNGSELEMENTE
TYRE HAVING A CARCASS REINFORCEMENT FORMED FROM A SINGLE LAYER OF TEXTILE REINFORCING ELEMENTS

(30) Priorité: 20.09.2018 FR 1858514
(43) Date de publication de la demande: 28.07.2021
(73) Titulaire: COMPAGNIE GENERALE DES ETABLISSEMENTS MICHELIN, 63000 Clermont-Ferrand (FR)
(72) Inventeur: DUCHEMIN, Sylvie, 63040 CLERMONT-FERRAND Cedex 9 (FR); FRANCIA, Marc, 63040 CLERMONT-FERRAND Cedex 9 (FR)
(74) Mandataire: Le Cam, Stéphane Georges Elie
(86) Numéro de dépôt international: PCT/FR2019/052180
(87) Numéro de publication internationale: WO 2020/058632

(56) Documents cités:
- WO-A1-98/52778
- FR-A1- 2 773 519
- FR-A1- 2 901 178
- US-A1- 2012 318 427

## Description

La présente invention concerne un pneumatique, à armature de carcasse radiale constituée d'une unique couche d'éléments de renforcement.

Bien que non limitée à ce type d'applications, l'invention sera plus particulièrement décrite en référence à un pneumatique destiné à équiper des véhicules de type petits poids-lourds (« light truck » en anglais), tels que, par exemple des camions ou des camionnettes.

D'une manière générale dans les pneumatiques de type petit poids-lourds, l'armature de carcasse est ancrée de part et d'autre dans la zone du bourrelet et est surmontée radialement par une armature de sommet.

L'armature de carcasse est usuellement constituée de deux couches constituées d'éléments de renforcement en textile, au moins l'une des deux couches d'armature de carcasse étant retournée autour d'une tringle.

Il est encore usuel de mettre une couche d'éléments de renforcement en polyamide aromatique, au moins une partie étant radialement intérieure à la tringle et dont les extrémités sont radialement extérieures au centre géométrique de la tringle, la première couche d'armature de carcasse étant intercalée entre la tringle et cette couche d'éléments de renforcement en polyamide aromatique.

Une telle couche d'éléments de renforcement en polyamide aromatique permet lors de roulages prolongés de protéger la première couche d'armature de carcasse et améliore les performances d'endurance du pneumatique.

L'armature de sommet est constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette couche, dite de triangulation, étant radialement située entre l'armature de carcasse et la première couche de sommet dite de travail, formées de fils ou câbles parallèles présentant des angles au plus égaux à 45° en valeur absolue. La couche de triangulation forme avec au moins ladite couche de travail une armature triangulée, qui présente, sous les différentes contraintes qu'elle subit, peu de déformations, la couche de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Le document WO 97/27070 décrit un exemple de pneumatiques pour véhicule petit poids-lourds dont l'armature de carcasse est constituée de deux couches, chacune étant retournée autour d'une tringle dans chacun des bourrelets. Afin de permettre un décalage radial des extrémités de retournement les semi-finis correspondants à chacun des couches d'armature de carcasse présentent des dimensions différentes.

Le document EP 1 792 752 décrit un pneumatique pour véhicule petit poids-lourds dont l'armature de carcasse est constituée de deux couches, une seule étant retournée autour d'une tringle dans chacun des bourrelets. La deuxième couche vient couvrir chacun des retournements de la première couche dans les zones des bourrelets.

Le document WO 97/27070 décrit un pneumatique pour véhicule petit poids-lourds dont l'armature de carcasse est constituée de deux couches associées à une troisième plus courte venant brider l'ensemble sur la tringle nécessitant des couches semi-finis de tailles différentes et un procédé de fabrication relativement complexe.

Le document FR 2 773 519 A1 décrit la zone du bourrelet d'un pneumatique pour poids-lourd constitué d'une couche de carcasse comportant des éléments de renforcement métalliques.

Le document WO 98/52778 A1 décrit la zone du bourrelet d'un pneumatique pour des engins de génie civil dont l'armature de carcasse est constituée de couches d'éléments de renforcement métalliques.

Un but de l'invention est de fournir des pneumatiques pour véhicules de type "petits Poids-Lourds", allégés par rapport aux pneumatiques usuels tout en assurant des performances des pneumatiques satisfaisantes notamment en termes d'endurance.

Ce but est atteint selon l'invention par un pneumatique à armature de carcasse radiale, comprenant une armature de sommet, elle-même coiffée radialement d'une bande de roulement, ladite bande de roulement étant réunie à deux bourrelets, comportant une tringle, par l'intermédiaire de deux flancs, ladite armature de carcasse étant constituée d'une unique couche formée d'éléments de renforcement textiles insérés entre deux couches de calandrage constituées d'un mélange caoutchouteux présentant un module sécant d'élasticité sous tension à 10 % d'allongement Mc, ladite couche d'armature de carcasse étant retournée autour de la tringle dans chacun des bourrelets, les extrémités de ladite première couche d'armature de carcasse étant radialement extérieure au point radialement le plus extérieur de la tringle dans chaque bourrelet, ledit pneumatique comprenant dans chaque flanc un premier élément de remplissage J, axialement intérieur à la surface extérieur d'un flanc et axialement extérieur au retournement de la couche d'armature de carcasse, constitué d'un mélange caoutchouteux présentant un module sécant d'élasticité sous tension à 10 % d'allongement M_{J}, chaque bourrelet comprenant un deuxième élément de remplissage T, constitué de mélange caoutchouteux présentant un module sécant d'élasticité sous tension à 10 % d'allongement M_{T}, prolongeant radialement vers l'extérieur le noyau tringle, axialement extérieur à la couche d'armature de carcasse et axialement intérieur au retournement de la couche d'armature de carcasse, ledit pneumatique comprenant un troisième élément de remplissage B1, constitué de mélange caoutchouteux présentant un module sécant d'élasticité sous tension à 10 % d'allongement M_{B1}, axialement au contact du retournement de la couche d'armature de carcasse et axialement au contact du deuxième élément de remplissage T et un quatrième élément de remplissage B2, constitué de mélange caoutchouteux présentant un module sécant d'élasticité sous tension à 10 % d'allongement M_{B2}, axialement au contact du retournement de la couche d'armature de carcasse et axialement au contact du premier élément de remplissage J, lesdits troisième et quatrième éléments de remplissage B1 et B2 étant axialement au contact l'un de l'autre radialement à l'extérieur de l'extrémité du retournement de la couche d'armature de carcasse, la couche d'armature de carcasse présentant une force rupture par unité de largeur supérieure à 3000 daN/dm, la couche d'armature de carcasse étant la seule couche d'éléments de renforcement présente radialement à l'intérieur de la tringle, les modules sécants d'élasticité sous tension à 10 % d'allongement M_{C}, M_{B1} satisfaisant la relation M_{C} / M_{B1} < 2, et les modules sécants d'élasticité sous tension à 10 % d'allongement M_{C}, M_{B2} satisfaisant la relation M_{C} / M_{B2} < 2.

Au sens de l'invention, une armature de carcasse radiale signifie que les éléments de renforcement des couches d'armature de carcasse sont dans un plan formant un angle avec un plan radial inférieur ou égal à 10°, les deux plans étant sécants selon un axe perpendiculaire à l'axe de rotation.

De préférence selon l'invention, l'indice de charge du pneumatique est compris entre 100 et 125.

L'indice de charge d'un pneumatique est un code numérique associé à la charge maximum qu'un pneumatique peut porter dans les conditions d'utilisation spécifiées par le manufacturier du pneumatique tel que défini dans le document « Standards Manual », 2017, de l'ETRTO (European Tyre and Rim Technical Organisation), General Information, page G.7.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Les mesures de module des compositions de caoutchouc sont réalisées sur pneumatique neuf.

La force rupture par unité de largeur d'une couche d'éléments de renforcement est déterminée à partir des mesures effectuées sur les éléments de renforcement et de la densité d'éléments de renforcement de la couche, elle-même définie par le nombre d'éléments de renforcement par unité de largeur.

La mesure de densité s'effectue en comptant visuellement le nombre de fils présents sur un échantillon de tissu non déformé d'une largeur de 10 cm. Le nombre de fils comptés est directement la valeur de densité du tissu en fils/dm. La mesure est effectuée dans la zone du bourrelet du pneumatique, radialement à l'intérieur de la tringle.

En ce qui concerne les fils ou câbles textiles, les propriétés mécaniques sont mesurées sur des fibres ayant été soumises à un conditionnement préalable. Par "conditionnement préalable", on entend le stockage des fibres pendant au moins 48 heures, avant mesure, dans une atmosphère standard selon la norme européenne NF EN ISO 139 (température de 20 +/- 2°C ; hygrométrie relative de 65 +/- 4%HR). Les propriétés mécaniques en extension (Force à la rupture, allongements sous charge) sont mesurées suivant une méthode de mesure spécifique, selon la norme ASTM D 885/D 885M - 10a de 2014 à l'aide de machines de traction statique étalonnées de marque INSTRON ou ZWICK. Les fils subissent une traction sur une longueur initiale entre mâchoires de 400 mm à une vitesse nominale de 200 mm/min. L'expression des résultats d'essai dépend du fil testé : le résultat d'essai peut être soit une seule valeur individuelle soit la moyenne de 5 valeurs individuelles.

Les mesures de propriétés mécaniques des éléments de renforcement textiles sont réalisées sur pneumatique neuf.

De préférence selon l'invention, la couche d'armature de carcasse présentant une force rupture par unité de largeur supérieure à 4100 daN/dm.

Le pneumatique ainsi défini selon l'invention peut équiper des véhicules de type petit poids lourd et présente une masse réduite par rapport aux pneumatiques usuels avec des performances en termes d'endurance au moins aussi bonnes que celles des pneumatiques plus usuels.

L'utilisation d'une unique couche d'éléments de renforcement en textile réalisées conformément à l'invention pour constituer la carcasse permet, tout en satisfaisant les critères de conception de tels pneumatiques de proposer un pneumatique plus léger que les pneumatiques usuels. Par ailleurs, l'absence d'une couche en polyamide contribue encore à l'allègement du pneumatique.

La valeur de force rupture par unité de largeur supérieure à 3000 daN/dm voire supérieure à 4100 daN/dm de la couche d'armature de carcasse permet notamment la tenue du pneumatique à la pression de gonflage.

Par ailleurs, le pneumatique selon l'invention qui ne comporte qu'une couche d'armature de carcasse retournée autour des tringles améliore les résultats en termes d'endurance du fait de l'absence de plusieurs extrémités de couches proches les unes des autres dans la zone du bourrelet.

Les inventeurs ont encore su mettre en évidence que la présence des troisième et quatrième éléments de remplissage B1 et B2, associée aux ratios du module sécant d'élasticité sous tension à 10 % d'allongement du mélange de calandrage de la couche d'armature de carcasse sur celui de chacun des troisième et quatrième éléments de remplissage B1 et B2 permettent d'améliorer les performances d'endurance du pneumatique en limitant les risques de propagation de fissures qui naissent en extrémité du retournement de la couche d'armature de carcasse.

Selon une variante de réalisation de l'invention, les troisième et quatrième éléments de remplissage B1 et B2 peuvent se confondre et ne former qu'un seul élément de remplissage, celui-ci étant replié autour de l'extrémité du retournement de la couche d'armature de carcasse.

De préférence selon l'invention, le module sécant d'élasticité sous tension à 10 % d'allongement M_{T} du deuxième élément de remplissage T est supérieur à 40 MPa et de préférence encore supérieur à 50 MPa.

Une telle rigidité du deuxième élément de remplissage T permet de rigidifier la zone du bourrelet et contribue ainsi aux performances en termes d'endurance.

Avantageusement selon l'invention, l'extrémité radialement la plus extérieure du deuxième élément de remplissage T est radialement intérieure à l'extrémité du retournement de la couche d'armature de carcasse.

Les inventeurs ont ainsi su mettre en évidence que la présence du deuxième élément de remplissage T ainsi éloignée de l'extrémité du retournement de la couche d'armature de carcasse favorisait encore la diminution du risque de propagation de fissures, notamment lorsque celui-ci présente une rigidité particulièrement élevée.

Avantageusement encore de l'invention, les modules sécants d'élasticité sous tension à 10 % d'allongement M_{J}, M_{B2} satisfont la relation M_{J} / M_{B2} < 2.

Les inventeurs ont encore su mettre en évidence que cette condition limite encore les risques de propagation de fissures depuis l'extrémité du retournement de la couche d'armature de carcasse vers la surface extérieure du pneumatique et contribue ainsi aux performances en termes d'endurance du pneumatique.

Selon un mode de réalisation préféré de l'invention, les éléments de renforcement textiles de la couche d'armature de carcasse sont des assemblages constitués de plusieurs brins multifilamentaires comprenant au moins un brin multifilamentaire de polyamide aromatique ou copolyamide aromatique, et au moins un brin multifilamentaire de polyester.

De préférence encore, les éléments de renforcement textiles de la couche d'armature de carcasse sont des assemblages constitués de deux brins multifilamentaires. Selon ce mode préféré de réalisation de l'invention, l'assemblage ne comprend pas d'autre brin multifilamentaire que les deux brins multifilamentaires de polyamide aromatique ou copolyamide aromatique et de polyester.

Par filament en polyamide aromatique ou copolyamide aromatique, on rappelle de manière bien connue qu'il s'agit d'un filament de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPT'A), fabriquées depuis fort longtemps à partir de compositions de filage optiquement anisotropes. Parmi les polyamides aromatiques ou copolyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les méta-aramides (ou poly(métaphénylène isophtalamide ou PA MPD-I notamment connu sous la dénomination commerciale Nomex de la société Du Pont de Nemours) ou les para-aramides (ou poly(paraphénylène téréphtalamide ou PA PPD-T notamment connu sous la dénomination commerciale Kevlar de la société Du Pont de Nemours ou Twaron de la société Teijin).

Par filament en polyester, on rappelle qu'il s'agit d'un filament de macromolécules linéaires formées de groupes liés entre eux par des liaisons esters. Les polyesters sont fabriqués par polycondensation par estérification entre un diacide carboxylique ou de l'un de ses dérivés un diol. Par exemple le polyéthylène téréphtalate peut être fabriqué par polycondensation de l'acide téréphtalique et de l'éthylène glycol. Parmi les polyesters connus, on pourra citer le polyéthylène téréphtalate (PET), le polyéthylène naphthalate (PEN), le polybutylène téréphthalate (PBT), le polybutylène naphthalate (PBN), le polypropylène téréphthalate (PPT') ou le polypropylène naphthalate (PPN).

Avantageusement selon l'invention, le diamètre des éléments de renforcement textiles de la couche d'armature de carcasse est inférieur ou égal à 0,95 mm, de préférence inférieur ou égal à 0,80 mm, plus préférentiellement inférieur ou égal à 0,70 mm.

Avantageusement encore selon l'invention, la densité d'éléments de renforcement textiles de la couche d'armature de carcasse est comprise entre 90 et 130 éléments de renforcement par décimètre, de préférence entre 100 et 125 éléments de renforcement par décimètre et plus préférentiellement entre 105 et 120 éléments de renforcement par décimètre.

Selon un mode de réalisation préféré de l'invention, le brin multifilamentaire de polyamide aromatique ou copolyamide aromatique et le brin multifilamentaire de polyester sont assemblés ensemble et sont enroulés en hélice l'un autour de l'autre.

Selon ce mode de réalisation préféré de l'invention, les éléments de renforcement de la couche d'armature de carcasse sont avantageusement équilibrés en torsions.

Au sens de l'invention, équilibré en torsions signifie que les deux brins multifilamentaires sont enroulés avec une torsion sensiblement identique et que la torsion des monofilaments de chaque brin multifilamentaire, c'est-à-dire la torsion des monofilaments du brin multifilamentaire de polyamide ou copolyamide aromatique et la torsion des monofilaments du brin de polyester est sensiblement nulle. En effet, le procédé de fabrication de ces éléments de renforcement textiles, bien connu de l'état de la technique, comprend une première étape durant laquelle, chaque filé de monofilament (en anglais « yarn ») est tout d'abord individuellement tordu sur lui-même (selon une torsion initiale R1' et R2' avec R1'=R2') dans une direction donnée D'=D1'=D2' (respectivement sens S ou Z, selon une nomenclature reconnue désignant l'orientation des spires selon la barre transversale d'un S ou d'un Z), pour former un brin ou surtors (en anglais « strand ») dans lequel les monofilaments se voient imposer une déformation en hélice autour de l'axe du brin. Puis, au cours d'une seconde étape, les deux brins, sont ensuite retordus ensemble selon une torsion finale R3 telle que R3=R1'=R2' en direction D3 opposée à la direction D'=D1'=D2' (respectivement sens Z ou S), pour l'obtention de l'élément de renfort (en anglais « cord »). Cet élément de renfort est alors dit équilibré en torsion car les monofilaments des deux brins présentent, dans l'élément de renfort final, la même torsion résiduelle car R1'=R2'. Cette torsion résiduelle est nulle ou sensiblement nulle car R3=R1'=R2' et la direction D'=D1'=D2' est opposée à la direction D3. Par torsion résiduelle sensiblement nulle, on entend que la torsion résiduelle est strictement inférieure à 2,5% de la torsion R3.

Selon d'autres variantes de réalisation de l'invention, les éléments de renforcement textiles sont déséquilibrés en torsions.

Au sens de l'invention, déséquilibré en torsions signifie que les deux brins multifilamentaires sont enroulés avec une torsion différente et que la torsion des monofilaments de chaque brin multifilamentaire, c'est-à-dire la torsion des monofilaments du brin multifilamentaire de polyamide ou copolyamide aromatique et la torsion des monofilaments du brin de polyester est non nulle. Cet élément de renforcement comprend un unique brin de monofilaments textiles à haut module et un unique brin de monofilaments textiles à bas module, enroulés l'un autour de l'autre selon une direction D3 avec une torsion R3, le brin de monofilaments textiles à haut module présentant une torsion résiduelle R1 selon la direction D1, le brin de monofilaments textiles à bas module présente une éventuelle torsion résiduelle R2 selon la direction D2, les torsions résiduelles R1 et R2 étant telles que :
R1>R2 dans le cas où R2 est sensiblement non-nulle
R1 est sensiblement non nulle dans le cas où R2 est sensiblement nulle.

De préférence, les deux brins sont enroulés en hélice l'un autour de l'autre, le facteur de torsion K (appelé Twist Multiplier en anglais) de l'élément de renforcement étant compris entre 5,2 et 6,5 ;
avec K défini par la formule K = (R x Ti^{1/2}) / 957
dans laquelle R est la torsion de l'élément de renforcement exprimée en tours par mètre et Ti est la somme des titres des brins multifilamentaires de l'élément de renfort en tex.

La mesure de la torsion R de l'élément de renforcement peut être réalisée par toute méthode connue par l'homme du métier, par exemple conformément à la norme ASTM D 885/D 885M - 10a de 2014.

Le titre (ou densité linéique) de chaque brin est déterminé selon la norme ASTM D1423. Le titre est donné en tex (poids en grammes de 1000 m de produit).

Avantageusement, l'élément de renforcement comprend également une couche d'une composition adhésive revêtant l'assemblage constitué des deux brins. Une telle composition adhésive est par exemple de type RFL (acronyme pour Résorcinol-Formaldéhyde-Latex).

La torsion des éléments de renforcement est avantageusement comprise entre 250 et 405 tours par mètre, et préférentiellement inférieure à 380 tours par mètre. Pour un titre donné, dans cet intervalle de torsion, l'élément de renfort présente une endurance suffisante pour être utilisé dans un pneumatique adapté à des véhicules du type petits poids-lourds et un risque de dispersion de sa force à rupture relativement faible.

Avantageusement, le titre du brin multifilamentaire de polyamide aromatique ou copolyamide aromatique est compris entre 140 et 210 tex, de préférence entre 160 et 180 tex. Dans l'intervalle de facteur de torsion conforme à l'invention, en utilisant des titres inférieurs aux intervalles décrits ci-dessus, l'élément de renforcement présenterait une torsion relativement élevée ce qui conduirait à un risque de dispersion de la force à rupture. A l'inverse, dans l'intervalle de facteur de torsion conforme à l'invention, en utilisant des titres supérieurs aux intervalles décrits ci-dessus, l'élément de renforcement présenterait une torsion relativement faible ce qui conduirait un risque de diminution de l'endurance. Ainsi, les intervalles de titre du brin multifilamentaire de polyamide aromatique ou copolyamide aromatique décrits ci-dessus permettent d'obtenir préférentiellement un bon compromis force à rupture-endurance.

Avantageusement encore, le titre du brin multifilamentaire de polyester est compris entre 100 et 210 tex, de préférence entre 120 et 190 tex, plus préférentiellement entre 130 et 180 tex. De façon analogue au titre du brin multifilamentaire de polyamide aromatique ou copolyamide aromatique, dans les intervalles de titres du brin multifilamentaire de polyester décrits ci-dessus, l'élément de renforcement présente ainsi un bon compromis force à rupture-endurance.

De préférence selon l'invention, le pneumatique présente un indice de charge supérieur à 102 et de préférence inférieur ou égal à 121.

Avantageusement selon l'invention, la pression nominale de gonflage du pneumatique est inférieure à 600kPa et de préférence supérieure à 370 kPa. De préférence encore, la pression nominale de gonflage du pneumatique est comprise entre 450 et 550 kPa.

Avantageusement encore selon l'invention, la hauteur de flanc du pneumatique est comprise entre 120 et 170 mm.

La hauteur de flanc est définie au sens de l'invention par la hauteur de section qui est la moitié de la différence entre le diamètre extérieur du pneumatique et le diamètre nominal de la jante tel que défini dans le document « Engineering Design Information », 2017, de l'ETRTO (European Tyre and Rim Technical Organisation), General Information, page GI.5.

Le rapport d'aspect du pneumatique selon l'invention est avantageusement compris entre 60 et 75.

Le rapport d'aspect est le rapport exprimé en pourcentage de la hauteur de la section du pneumatique sur la largeur nominale de la section du pneumatique tel que défini dans le document « Engineering Design Information », 2017, de l'ETRTO (European Tyre and Rim Technical Organisation), paragraphe D, page GI.5.

Le pneumatique selon l'invention est avantageusement prévu pour être monté sur des jantes dont le diamètre nominal est compris entre 14 et 17 pouces.

D'autres détails et caractéristiques avantageux de l'invention ressortiront ci-après de la description des exemples de réalisation de l'invention en référence aux figures 1 à 3 qui représentent :
- figure1, une représentation schématique d'une vue en coupe d'un bourrelet selon un mode de réalisation d'un pneumatique selon l'invention,
- figure 2, une représentation schématique d'une vue en coupe d'un bourrelet selon un mode de réalisation d'un pneumatique allégé non conforme à l'invention,
- figure 3, une représentation schématique d'une vue en coupe d'un bourrelet selon un mode de réalisation d'un pneumatique de conception usuelle.

Les figures ne sont pas représentées à l'échelle pour en simplifier la compréhension.

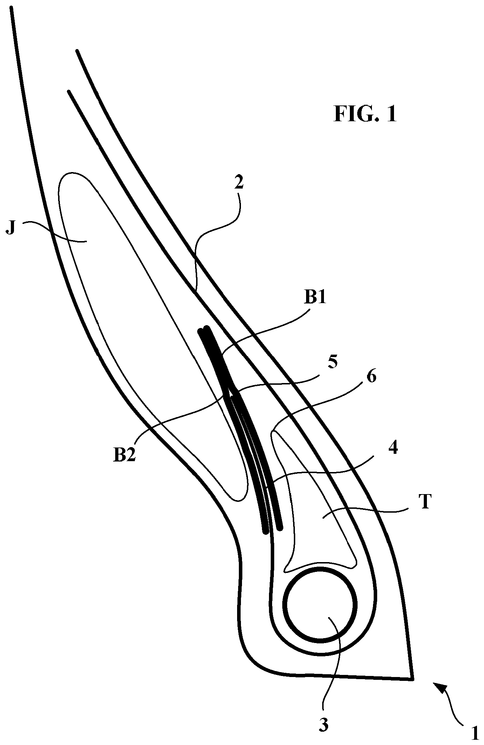

La figure 1 illustre une représentation schématique en coupe d'un bourrelet 1 d'un pneumatique de type camionnette de dimension 215/75R16 dont l'indice de charge est égal à 113. Au niveau de ce bourrelet 1 du pneumatique on retrouve une partie de la couche d'armature de carcasse 2 enroulée autour d'une tringle 3 pour former un retournement 4 présentant une extrémité 5.

La couche d'armature de carcasse 2 est constituée d'éléments de renforcement entre deux couches de calandrage formées de mélange caoutchouteux présentant des modules sécants d'élasticité sous tension à 10 % d'allongement Mc.

Le module sécant d'élasticité sous tension à 10 % d'allongement Mc de la couche d'armature de carcasse 2 est égal à 5.8 MPa.

Sur cette figure 1, on peut encore observer un premier élément de remplissage J, axialement intérieur au flanc et axialement extérieur au retournement 4 de la première couche d'armature de carcasse 2, constitué de mélange caoutchouteux présentant un module sécant d'élasticité sous tension à 10 % d'allongement Mj égal à 7.9 MPa.

Le bourrelet 1 comporte encore un deuxième élément de remplissage T prolongeant radialement vers l'extérieur le noyau tringle, constitué de mélange caoutchouteux présentant un module sécant d'élasticité sous tension à 10 % d'allongement M_{T} égal à 54 MPa. Le deuxième élément de remplissage T a, dans tout plan méridien, une section sensiblement triangulaire. L'extrémité radialement la plus extérieure 6 du deuxième élément de remplissage T est radialement intérieure à l'extrémité 5 du retournement 4 de la couche d'armature de carcasse 2.

La figure 1 illustre encore les troisième et quatrième éléments de remplissage B1 et B2 qui sont axialement au contact de l'extrémité 5 du retournement 4 de la couche d'armature de carcasse 2.

Les modules sécants d'élasticité sous tension à 10 % d'allongement M_{B1} et M_{B2} des troisième et quatrième éléments de remplissage B1 et B2 sont égaux à 5.8 MPa.

Les ratios Mc / M_{B1} et M_{C} / M_{B2} sont égaux à 1 et donc bien inférieurs à 2.

Le ratio M_{J} / M_{B2} est égal à 1.8 et donc bien inférieur à 2.

Les éléments de renforcement de la couche d'armature de carcasse sont des assemblages constitués d'un brin multifilamentaire en para-aramide (p-Aramide), connu sous la dénomination commerciale Twaron 1000 de la société Teijin, et d'un brin multifilamentaire en polyéthylène téréphtalate (PET), connu sous la dénomination commerciale PET HMLS (High Module Low Shrinkage) des sociétés Hyosung ou Hailide, les deux brins étant enroulés en hélice l'un autour de l'autre. Les éléments de renforcement de la couche d'armature de carcasse sont équilibrés en torsions.

La torsion des éléments de renforcement p-Aramide/PET de la couche d'armature de carcasse est égale à 315 t/m.

Le titre des éléments de renforcement de la couche d'armature de carcasse exprimé en tex est 167/167.

Le facteur de torsion K est égal à 5.9.

Le diamètre des éléments de renforcement de la couche d'armature de carcasse est égal à 0.67 mm.

La force à rupture des éléments de renforcement de la couche d'armature de carcasse est égale à 40daN.

La densité d'éléments de renforcement dans la couche d'armature de carcasse est égale à 110 fils/dm.

La couche d'armature de carcasse présente une force à rupture par unité de largeur égale à 4400 daN/dm.

La masse du pneumatique est égale à 15 Kg.

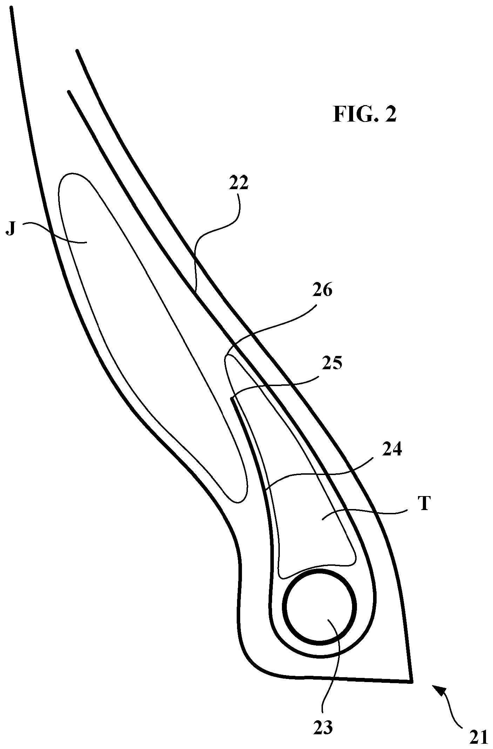

La figure 2 illustre une représentation schématique d'une vue en coupe d'un bourrelet 21 selon un mode de réalisation d'un pneumatique allégé non conforme à l'invention à des fins de comparaison.

Ce bourrelet 21 correspond à un pneumatique semblable à celui de l'invention, représenté sur la figure 1 mais qui en diffère par l'absence des troisième et quatrième éléments de remplissage et dont l'extrémité 26 de l'élément de remplissage T est radialement extérieure à l'extrémité 25 du retournement 24 de la couche d'armature de carcasse 22.

L'extrémité 25 du retournement 24 de la couche d'armature de carcasse 22 est ainsi axialement au contact du premier élément de remplissage J et du deuxième élément de remplissage T.

Les éléments de renforcement de la couche d'armature de carcasse sont identiques à ceux de la couche d'armature de carcasse 2 du pneumatique selon l'invention représenté sur la figure 1.

La masse d'un tel pneumatique est égale à 15 Kg.

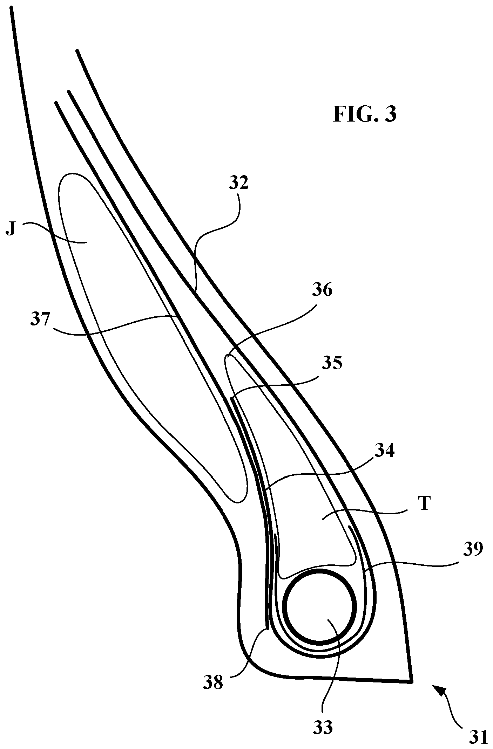

La figure 3 illustre une représentation schématique d'une vue en coupe d'un bourrelet 31 d'un pneumatique de conception usuelle comportant deux couche 32, 37 d'armature de carcasse. La première couche d'armature de carcasse 32 est retournée autour d'une tringle 33 pour former un retournement 34. Est également représentée une partie de la deuxième couche d'armature de carcasse 37 dont l'extrémité 38 est axialement extérieure à la tringle 33.

Le pneumatique comporte encore une couche 39 d'éléments de renforcement en polyamide aromatique au contact de ladite première couche d'armature de carcasse 32 sur toute sa longueur, au moins une partie étant radialement intérieure à la tringle 33 et ladite couche 39 d'éléments de renforcement en polyamide aromatique étant intercalée entre la tringle 33 et la première couche d'armature de carcasse 32.

Les éléments de renforcement des deux couches d'armature de carcasse 32 et 37 des assemblages constitués de deux brins multifilamentaires PET/PET.

La torsion des éléments de renforcement PET/PET est égale à 420 t/m.

Le titre des éléments de renforcement des couches d'armature de carcasse exprimé en tex est 144/144.

Le facteur de torsion K est égal à 7.4.

Le diamètre des éléments de renforcement des couches d'armature de carcasse est égal à 0.62 mm.

La force à rupture des éléments de renforcement des couches d'armature de carcasse est égale à 17.3 daN.

La densité d'éléments de renforcement dans les deux couches d'armature de carcasse est égale à 123 fils/dm.

Chacune des deux couches 32, 37 d'armature de carcasse présente une force à rupture par unité de largeur égale à 2130 daN/dm.

La masse du pneumatique est égale à 15.8 Kg.

Les trois pneumatiques correspondant aux figures 1, 2 et 3 sont identiques pour tout ce qui n'est pas décrit précédemment et comporte notamment la même armature sommet.

Des essais ont été réalisés avec des pneumatiques réalisés selon l'invention et d'autres avec des pneumatiques dits de référence.

Les pneumatiques I selon l'invention qui sont testés sont conformes à la représentation de la figure 1.

Des pneumatiques R1 sont réalisés conformément à la représentation de la figure 2.

Des pneumatiques R2 sont réalisés conformément à la représentation de la figure 3.

Des essais d'endurance ont été réalisés sur une machine de test imposant à chacun des pneumatiques un roulage ligne droite à une vitesse variant de 50 à 110 km/h (l'indice de vitesse prescrit du pneumatique est égal à 120 km/h) sous une charge variant entre la charge nominale et 1.9 fois la charge nominale et à des pressions de gonflage variant entre 0.7 fois et 1.1 fois la pression nominale qui est de 475 kPa.

Un seuil de kilométrage réalisé est défini pour considérer les pneumatiques comme étant suffisamment endurant en référence aux pneumatiques de référence R1.

Les pneumatiques R2 ont atteint ce même kilométrage mais présente des fissurations au sein des mélanges J et T qui imposent un remplacement des pneumatiques.

Les pneumatiques I selon l'invention ont atteint ce même niveau de kilométrage et un examen approfondi des pneumatiques a mis en évidence qu'ils ne présentaient aucun défaut pouvant nécessiter un retrait des pneumatiques.

Les pneumatiques selon l'invention conduisent donc à des performances notamment en termes d'endurance satisfaisantes.

## Revendications

1. - Pneumatique à armature de carcasse radiale (2), comprenant une armature de sommet, elle-même coiffée radialement d'une bande de roulement, ladite bande de roulement étant réunie à deux bourrelets (1), comportant une tringle (3), par l'intermédiaire de deux flancs, ladite armature de carcasse (2) étant constituée d'une unique couche formée d'éléments de renforcement textiles insérés entre deux couches de calandrage constituées d'un mélange caoutchouteux présentant un module sécant d'élasticité sous tension à 10 % d'allongement Mc, ladite couche d'armature de carcasse (2) étant retournée autour de la tringle (3) dans chacun des bourrelets (1), les extrémités (5) de ladite couche d'armature de carcasse (2) étant radialement extérieure au point radialement le plus extérieur de la tringle dans chaque bourrelet, ledit pneumatique comprenant dans chaque flanc un premier élément de remplissage (J), axialement intérieur à la surface extérieur d'un flanc et axialement extérieur au retournement (4) de la couche d'armature de carcasse, constitué d'un mélange caoutchouteux présentant un module sécant d'élasticité sous tension à 10 % d'allongement M_{J}, chaque bourrelet (1) comprenant un deuxième élément de remplissage (T), constitué de mélange caoutchouteux présentant un module sécant d'élasticité sous tension à 10 % d'allongement M_{T}, prolongeant radialement vers l'extérieur le noyau tringle, axialement extérieur à la couche d'armature de carcasse (2) et axialement intérieur au retournement (4) de la couche d'armature de carcasse, ledit pneumatique comprenant un troisième élément de remplissage (B1), constitué de mélange caoutchouteux présentant un module sécant d'élasticité sous tension à 10 % d'allongement M_{B1}, axialement au contact du retournement (4) de la couche d'armature de carcasse et axialement au contact du deuxième élément de remplissage (T) et un quatrième élément de remplissage (B2), constitué de mélange caoutchouteux présentant un module sécant d'élasticité sous tension à 10 % d'allongement M_{B2}, axialement au contact du retournement (4) de la couche d'armature de carcasse et axialement au contact du premier élément de remplissage (J), lesdits troisième et quatrième éléments de remplissage (B1) et (B2) étant axialement au contact l'un de l'autre radialement à l'extérieur de l'extrémité (5) du retournement (4) de la couche d'armature de carcasse,
**caractérisé en ce que** la couche d'armature de carcasse (2) présente une force à rupture par unité de largeur supérieure à 3000 daN/dm,
**en ce que,** la couche d'armature de carcasse (2) est la seule couche d'éléments de renforcement présente radialement à l'intérieur de la tringle (3), **en ce que** les modules sécants d'élasticité sous tension à 10 % d'allongement Mc, M_{B1} satisfont la relation M_{C} / M_{B1} < 2 et **en ce que** les modules sécants d'élasticité sous tension à 10 % d'allongement M_{C}, M_{B2} satisfont la relation M_{C} / M_{B2} < 2.

2. - Pneumatique selon la revendication 1, **caractérisé en ce que** l'indice de charge du pneumatique est compris entre 100 et 125.

3. - Pneumatique selon l'une des revendications 1 ou 2, **caractérisé en ce que** la couche d'armature de carcasse (2) présente une force à rupture par unité de largeur supérieure à 4100 daN/dm.

4. - Pneumatique selon l'une des revendications 1 à 3, **caractérisé en ce que** le module sécant d'élasticité sous tension à 10 % d'allongement M_{T} du deuxième élément de remplissage (T) est supérieur à 40 MPa.

5. - Pneumatique selon l'une des revendications précédentes, **caractérisé en ce que** l'extrémité (6) radialement la plus extérieure du deuxième élément de remplissage (T) est radialement intérieure à l'extrémité (5) du retournement (4) de la couche d'armature de carcasse.

6. - Pneumatique selon l'une des revendications précédentes, **caractérisé en ce que** les modules sécants d'élasticité sous tension à 10 % d'allongement M_{J}, M_{B2} satisfont la relation M_{J} / M_{B2} < 2.

7. - Pneumatique selon l'une des revendications précédentes, **caractérisé en ce que** la distance entre l'extrémité (5) du retournement de la couche d'armature de carcasse et le point radialement le plus intérieur du cercle circonscrit à la tringle (3) est comprise entre 25 et 40% de la distance entre le point axialement le plus extérieur de la partie principale de la couche d'armature de carcasse et le point radialement le plus intérieur du cercle circonscrit à la tringle.

8. - Pneumatique selon l'une des revendications précédentes, **caractérisé en ce que** les éléments de renforcement textiles de la couche d'armature de carcasse (2) sont des assemblages constitués de plusieurs brins multifilamentaires comprenant au moins un brin multifilamentaire de polyamide aromatique ou copolyamide aromatique, et au moins un brin multifilamentaire de polyester.

9. - Pneumatique selon l'une des revendications précédentes, **caractérisé en ce que** les éléments de renforcement textiles de la couche d'armature de carcasse (2) sont des assemblages constitués de deux brins multifilamentaires.

10. - Pneumatique selon l'une des revendications 8 ou 9, **caractérisé en ce que** le titre du brin multifilamentaire de polyamide aromatique ou copolyamide aromatique est compris entre 140 et 210 tex.

11. - Pneumatique selon l'une des revendications 8 à 10, **caractérisé en ce que** le titre du brin multifilamentaire de polyester est compris entre 100 et 210 tex.

12. - Pneumatique selon l'une des revendications précédentes, **caractérisé en ce que** la densité d'éléments de renforcement textiles de la couche d'armature de carcasse (2) est comprise entre 90 et 130 éléments de renforcement par décimètre.

13. - Pneumatique selon l'une des revendications précédentes, **caractérisé en ce que** les éléments de renforcement textiles de la couche d'armature de carcasse (2) sont équilibrés en torsions.

14. - Utilisation d'un pneumatique tel que décrit selon l'une des revendications 1 à 13 pour un véhicule de type camionnette.

## Patentansprüche

1. Reifen mit radialer Karkassenbewehrung (2), umfassend eine Scheitelbewehrung, die wiederum radial von einem Laufstreifen überdeckt wird, wobei der Laufstreifen über zwei Flanken mit zwei Wülsten (1), die einen Wulstkern (3) beinhalten, verbunden ist, wobei die Karkassenbewehrung (2) aus einer einzigen Lage besteht, die aus textilen Verstärkungselementen gebildet wird, die zwischen zwei Kalandrierlagen eingefügt sind, die aus einer Kautschukmischung bestehen, die einen Sekanten-Elastizitätsmodul unter Zug bei 10 % Dehnung M_{C} aufweisen, wobei die Karkassenbewehrungslage (2) in jedem der Wülste (1) um den Wulstkern (3) herum umgeschlagen ist, wobei die Enden (5) der Karkassenbewehrungslage (2) in jedem Wulst radial außerhalb des radial äußersten Punkts des Wulstkerns sind, wobei der Reifen in jeder Flanke ein erstes Füllelement (J) umfasst, axial innerhalb der äußeren Fläche einer Flanke und axial außerhalb des Umschlags (4) der Karkassenbewehrungslage, das aus einer Kautschukmischung besteht, die einen Sekanten-Elastizitätsmodul unter Zug bei 10 % Dehnung M_{J} aufweist, wobei jeder Wulst (1) ein zweites Füllelement (T) umfasst, das aus einer Kautschukmischung besteht, die einen Sekanten-Elastizitätsmodulunter Zug bei 10 % Dehnung M_{T} aufweist, das den Wulstkern radial nach außen verlängert, axial außerhalb der Karkassenbewehrungslage (2) und axial innerhalb des Umschlags (4) der Karkassenbewehrungslage, wobei der Reifen ein drittes Füllelement (B1) umfasst, das aus einer Kautschukmischung besteht, die einen Sekanten-Elastizitätsmodul unter Zug bei 10 % Dehnung M_{B1} aufweist, axial in Kontakt mit dem Umschlag (4) der Karkassenbewehrungslage und axial in Kontakt mit dem zweiten Füllelement (T), und ein viertes Füllelement (B2), das aus einer Kautschukmischung besteht, die einen Sekanten-Elastizitätsmodul unter Zug bei 10 % Dehnung M_{B2} aufweist, axial in Kontakt mit dem Umschlag (4) der Karkassenbewehrungslage und axial in Kontakt mit dem ersten Füllelement (J), wobei das dritte und das vierte Füllelement (B1) und (B2) radial außerhalb des Endes (5) des Umschlags (4) der Karkassenbewehrungslage axial in Kontakt miteinander sind,
**dadurch gekennzeichnet, dass** die Karkassenbewehrungslage (2) eine Bruchkraft je Breiteneinheit von mehr als 3000 daN/dm aufweist,
dass die Karkassenbewehrungslage (2) die einzige Lage aus Verstärkungselementen ist, die radial innerhalb des Wulstkerns (3) vorhanden ist, dass die Sekanten-Elastizitätsmodule unter Zug bei 10 % Dehnung M_{C}, M_{B1} die Gleichung M_{C} / M_{B1} < 2 erfüllen und dass die Sekanten-Elastizitätsmodule unter Zug bei 10 % Dehnung M_{C}, M_{B2} die Gleichung M_{C} / M_{B2} < 2 erfüllen.

2. Reifen nach Anspruch 1, **dadurch gekennzeichnet, dass** der Lastindex des Reifens zwischen 100 und 125 beträgt.

3. Reifen nach einem der Ansprüche 1 oder 2, **dadurch gekennzeichnet, dass** die Karkassenbewehrungslage (2) eine Bruchkraft je Breiteneinheit von mehr als 4100 daN/dm aufweist.

4. Reifen nach einem der Ansprüche 1 bis 3, **dadurch gekennzeichnet, dass** der Sekanten-Elastizitätsmodul unter Zug bei 10 % Dehnung M_{T} des zweiten Füllelements (T) größer als 40 MPa ist.

5. Reifen nach einem der vorhergehenden Ansprüche, **dadurch gekennzeichnet, dass** das radial äußerste Ende (6) des zweiten Füllelements (T) radial innerhalb des Endes (5) des Umschlags (4) der Karkassenbewehrungslage ist.

6. Reifen nach einem der vorhergehenden Ansprüche, **dadurch gekennzeichnet, dass** die Sekanten-Elastizitätsmodule unter Zug bei 10 % Dehnung M_{J}, M_{B2} die Gleichung M_{J} / M_{B2} < 2 erfüllen.

7. Reifen nach einem der vorhergehenden Ansprüche, **dadurch gekennzeichnet, dass** der Abstand zwischen dem Ende (5) des Umschlags der Karkassenbewehrungslage und dem radial innersten Punkt des dem Wulstkern (3) umschriebenen Kreises zwischen 25 und 40 % des Abstands zwischen dem axial äußersten Punkt des Hauptteils der Karkassenbewehrungslage und dem radial innersten Punkt des dem Wulstkern umschriebenen Kreises beträgt.

8. Reifen nach einem der vorhergehenden Ansprüche, **dadurch gekennzeichnet, dass** die textilen Verstärkungselemente der Karkassenbewehrungslage (2) Bündel sind, die aus mehreren Multifilamentfäden bestehen, die mindestens einen Multifilamentfaden aus aromatischem Polyamid oder aromatischem Copolyamid und mindestens einen Multifilamentfaden aus Polyester umfassen.

9. Reifen nach einem der vorhergehenden Ansprüche, **dadurch gekennzeichnet, dass** die textilen Verstärkungselemente der Karkassenbewehrungslage (2) Bündel sind, die aus zwei Multifilamentfäden bestehen.

10. Reifen nach einem der Ansprüche 8 oder 9, **dadurch gekennzeichnet, dass** der Titer des Multifilamentfadens aus aromatischem Polyamid oder aromatischem Copolyamid zwischen 140 und 210 tex beträgt.

11. Reifen nach einem der Ansprüche 8 bis 10, **dadurch gekennzeichnet, dass** der Titer des Multifilamentfadens aus Polyester zwischen 100 und 210 tex beträgt.

12. Reifen nach einem der vorhergehenden Ansprüche, **dadurch gekennzeichnet, dass** die Dichte der textilen Verstärkungselemente der Karkassenbewehrungslage (2) zwischen 90 und 130 Verstärkungselementen je Dezimeter beträgt.

13. Reifen nach einem der vorhergehenden Ansprüche, **dadurch gekennzeichnet, dass** die textilen Verstärkungselemente der Karkassenbewehrungslage (2) drallausgeglichen sind.

14. Verwendung eines Reifens nach einem der Ansprüche 1 bis 13 für ein Fahrzeug vom Typ Kleintransporter.

## Claims

1. - Tyre having a radial carcass reinforcement (2), comprising a crown reinforcement, itself capped radially by a tread, said tread being joined to two beads (1), having a bead wire (3), via two sidewalls, said carcass reinforcement (2) being made up of a single layer formed of textile reinforcing elements inserted between two skim layers made up of a rubbery compound having a secant elastic modulus under tension at 10% elongation Mc, said carcass reinforcement layer (2) being turned up around the bead wire (3) in each of the beads (1), the ends (5) of said carcass reinforcement layer (2) being radially on the outside of the radially outermost point of the bead wire in each bead, said tyre comprising, in each sidewall, a first filling element (J), axially on the inside of the outer surface of one sidewall and axially on the outside of the turn-up (4) of the carcass reinforcement layer, made up of a rubbery compound having a secant elastic modulus under tension at 10% elongation M_{J}, each bead (1) comprising a second filling element (T), made up of a rubbery compound having a secant elastic modulus under tension at 10% elongation M_{T}, radially extending the bead wire core towards the outside, axially on the outside of the carcass reinforcement layer (2) and axially on the inside of the turn-up (4) of the carcass reinforcement layer, said tyre comprising a third filling element (B 1), made up of a rubbery compound having a secant elastic modulus under tension at 10% elongation M_{B1}, axially in contact with the turn-up (4) of the carcass reinforcement layer and axially in contact with the second filling element (T), and a fourth filling element (B2), made up of a rubbery compound having a secant elastic modulus under tension at 10% elongation M_{B2}, axially in contact with the turn-up (4) of the carcass reinforcement layer and axially in contact with the first filling element (J), said third and fourth filling elements (B 1) and (B2) being axially in contact with one another radially on the outside of the end (5) of the turn-up (4) of the carcass reinforcement layer,
**characterized in that** the carcass reinforcement layer (2) exhibits a force at break per unit width greater than 3000 daN/dm,
**in that** the carcass reinforcement layer (2) is the only layer of reinforcing elements that is present radially on the inside of the bead wire (3), **in that** the secant elastic moduli under tension at 10% elongation M_{C}, M_{B1} satisfy the relationship M_{C}/M_{B1} < 2 and **in that** the secant elastic moduli under tension at 10% elongation M_{C}, M_{B2} satisfy the relationship M_{C}/M_{B2} < 2.

2. - Tyre according to Claim 1, **characterized in that** the load index of the tyre is between 100 and 125.

3. - Tyre according to either of Claims 1 and 2, **characterized in that** the carcass reinforcement layer (2) exhibits a force at break per unit width greater than 4100 daN/dm.

4. - Tyre according to one of Claims 1 to 3, **characterized in that** the secant elastic modulus under tension at 10% elongation M_{T} of the second filling element (T) is greater than 40 MPa.

5. - Tyre according to one of the preceding claims, **characterized in that** the radially outermost end (6) of the second filling element (T) is radially on the inside of the end (5) of the turn-up (4) of the carcass reinforcement layer.

6. - Tyre according to one of the preceding claims, **characterized in that** the secant elastic moduli under tension at 10% elongation M_{J}, M_{B2} satisfy the relationship M_{J}/M_{B2} < 2.

7. - Tyre according to one of the preceding claims, **characterized in that** the distance between the end (5) of the turn-up of the carcass reinforcement layer and the radially innermost point of the circle circumscribed on the bead wire (3) is between 25 and 40% of the distance between the axially outermost point of the main part of the carcass reinforcement layer and the radially innermost point of the circle circumscribed on the bead wire.

8. - Tyre according to one of the preceding claims, **characterized in that** the textile reinforcing elements of the carcass reinforcement layer (2) are assemblies made up of a plurality of multifilament strands comprising at least one multifilament strand of aromatic polyamide or aromatic copolyamide, and at least one multifilament strand of polyester.

9. - Tyre according to one of the preceding claims, **characterized in that** the textile reinforcing elements of the carcass reinforcement layer (2) are assemblies made up of two multifilament strands.

10. - Tyre according to either of Claims 8 and 9, **characterized in that** the count of the multifilament strand of aromatic polyamide or aromatic copolyamide is between 140 and 210 tex.

11. - Tyre according to one of Claims 8 to 10, **characterized in that** the count of the multifilament strand of polyester is between 100 and 210 tex.

12. - Tyre according to one of the preceding claims, **characterized in that** the density of textile reinforcing elements in the carcass reinforcement layer (2) is between 90 and 130 reinforcing elements per decimetre.

13. - Tyre according to one of the preceding claims, **characterized in that** the textile reinforcing elements of the carcass reinforcement layer (2) are twist-balanced.

14. - Use of a tyre as described in one of Claims 1 to 13 for a vehicle of the van type.
